(19) Europäisches Patentamt
European Patent Office
Office européen des brevets

(11) EP 1 299 235 B1

(12) EUROPÄISCHE PATENTSCHRIFT

(45) Veröffentlichungstag und Bekanntmachung des Hinweises auf die Patenterteilung:
**06.05.2004 Patentblatt 2004/19**

(21) Anmeldenummer: **01943501.5**

(22) Anmeldetag: **13.06.2001**

(51) Int Cl.[7]: **B32B 27/36**

(86) Internationale Anmeldenummer:
**PCT/EP2001/006680**

(87) Internationale Veröffentlichungsnummer:
**WO 2001/098083 (27.12.2001 Gazette 2001/52)**

# (54) WEISSE, SIEGELFÄHIGE, BIAXIAL ORIENTIERTE, KOEXTRUDIERTE POLYESTERFOLIE MIT CYCLOOLEFINCOPOLYMER (COC), VERFAHREN ZU IHRER HERSTELLUNG UND IHRE VERWENDUNG

WHITE, SEALABLE, BIAXIALLY-ORIENTED, CO-EXTRUDED POLYESTER FILM WITH CYCLOOLEFINIC COPOLYMER (COC), METHOD FOR PRODUCTION AND USE THEREOF

FEUILLE DE POLYESTER BLANCHE, COEXTRUDEE, BIAXIALEMENT ORIENTEE ET SCELLABLE CONTENANT UN COPOLYMERE CYCLO-OLEFINE (COC), SON PROCEDE DE FABRICATION ET SON UTILISATION

(84) Benannte Vertragsstaaten:
**DE FR GB IT LU NL**

(30) Priorität: **20.06.2000 DE 10030238**

(43) Veröffentlichungstag der Anmeldung:
**09.04.2003 Patentblatt 2003/15**

(73) Patentinhaber: **Mitsubishi Polyester Film GmbH**
**65203 Wiesbaden (DE)**

(72) Erfinder:
- **PEIFFER, Herbert**
  **55126 Mainz (DE)**
- **KLIESCH, Holger**
  **55252 Mainz-Kastel (DE)**
- **MURSCHALL, Ursula**
  **55283 Nierstein (DE)**
- **BENNETT, Cynthia**
  **55232 Alzey (DE)**

(74) Vertreter: **Schweitzer, Klaus, Dr. et al**
**Patentanwaltskanzlei Zounek,**
**Industriepark Kalle-Albert,**
**Gebäude H391**
**Rheingaustrasse 190-196**
**65174 Wiesbaden (DE)**

(56) Entgegenhaltungen:
**EP-A- 0 786 495**
**EP-A- 0 947 982**
**EP-A- 1 068 949**
**US-A- 5 866 256**

- **PATENT ABSTRACTS OF JAPAN vol. 017, no. 274 (C-1064), 27. Mai 1993 (1993-05-27) & JP 05 009319 A (UNITIKA LTD), 19. Januar 1993 (1993-01-19)**

EP 1 299 235 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft eine weiße, siegelfähige, biaxial orientierte, koextrudierte Polyesterfolie, die mindestens eine Basisschicht B und mindestens eine siegelfähige Deckschicht A umfasst, beide aus thermoplastischem Polyester, wobei mindestens die Basisschicht B einen Polyesterrohstoff und ein Cycloolefincopolymer (COC) enthält. Die Erfindung betrifft ferner ein Verfahren zur Herstellung der Polyesterfolie sowie ihre Verwendung.

Weiße, biaxial orientierte Polyesterfolien sind nach dem Stand der Technik bekannt. Diese nach dem Stand der Technik bekannten Folien zeichnen sich entweder durch eine gute Herstellbarkeit oder durch eine gute Optik oder durch ein akzeptables Verarbeitungsverhalten aus.

In der DE-A 23 53 347 wird ein Verfahren zur Herstellung einer ein- oder mehrschichtigen, milchigen Polyesterfolie beschrieben, das dadurch gekennzeichnet ist, dass man ein Gemisch aus Teilchen eines linearen Polyesters mit 3 bis 27 Gew.-% eines Homopolymeren oder Mischpolymeren von Ethylen oder Propylen herstellt, das Gemisch als Film extrudiert, den Film abschreckt und durch Verstrecken in senkrecht zueinander verlaufenden Richtungen biaxial orientiert und den Film thermofixiert. Nachteilig an dem Verfahren ist, dass das bei der Herstellung der Folie anfallende Regenerat (im Wesentlichen ein Gemisch aus Polyesterrohstoff und Ethylen- oder Propylen-Mischpolymer) nicht mehr für die Produktion eingesetzt werden kann, da ansonsten die Folie gelb wird. Das Verfahren ist damit aber unwirtschaftlich und die mit Regenerat produzierte, gelbliche Folie konnte sich am Markt nicht durchsetzen. Außerdem weist die Folie deutlich zu hohe Rauigkeiten auf und hat damit ein sehr mattes Aussehen (sehr niedriger Glanz), was für viele Anwendungszwecke unerwünscht ist.

In der EP-A-0 300 060 wird eine einschichtige Polyesterfolie beschrieben, die außer Polyethylenterephthalat noch 3 bis 40 Gew.-% eines kristallinen Propylenpolymeren und 0,001 bis 3 Gew.-% einer oberflächenaktiven Substanz enthält. Die oberflächenaktive Substanz bewirkt, dass die Anzahl der Vakuolen in der Folie ansteigt und gleichzeitig ihre Größe in gewünschtem Maße abnimmt. Hierdurch wird eine höhere Opazität und eine niedrigere Dichte der Folie erzielt. Nachteilig an der Folie bleibt weiterhin, dass bei der Herstellung der Folie anfallendes Verschnittmaterial (im Wesentlichen ein Gemisch aus Polyesterrohstoff und Propylen-Homopolymer) nicht mehr als Regenerat eingesetzt werden kann, da ansonsten die Folie gelb wird. Das Verfahren ist damit aber unwirtschaftlich und die mit Regenerat produzierte Folie mit Gelbstich konnte sich am Markt nicht durchsetzen. Außerdem weist die Folie deutlich zu hohe Rauigkeiten auf und hat damit ein sehr mattes Aussehen (sehr niedriger Glanz), was für viele Anwendungszwecke unerwünscht ist.

In der EP-A-0 360 201 wird eine zumindest zweischichtige Polyesterfolie beschrieben, die eine Basisschicht mit feinen Vakuolen enthält, deren Dichte zwischen 0,4 und 1,3 $kg/dm^3$ liegt und mindestens eine Deckschicht aufweist, deren Dichte größer als 1,3 kg/dm ist. Die Vakuolen werden durch Zugabe von 4 bis 30 Gew.-% eines kristallinen Propylenpolymeren und anschließender biaxialer Streckung der Folie erzielt. Durch die zusätzliche Deckschicht wird die Herstellbarkeit der Folie besser (keine Streifenbildung auf der Oberfläche der Folie), die Oberflächenspannung wird erhöht und die Rauigkeit der laminierten Oberfläche kann verringert werden. Nachteilig bleibt jedoch, dass das bei der Herstellung der Folie anfallende Regenerat (im Wesentlichen ein Gemisch aus Polyesterrohstoff und Propylen-Homopolymer) nicht mehr für den Herstellprozess eingesetzt werden kann, da ansonsten die Folie gelb wird. Das Verfahren ist damit aber unwirtschaftlich und die mit Regenerat produzierte, gelbstichige Folie konnte sich am Markt nicht durchsetzen. Außerdem weisen die in den Beispielen aufgeführten Folien noch immer zu hohe Rauigkeiten auf und haben damit ein mattes Aussehen (niedriger Glanz), was für viele Anwendungszwecke unerwünscht ist.

In der EP-A-0 795 399 wird eine zumindest zweischichtige Polyesterfolie beschrieben, die eine Basisschicht mit feinen Vakuolen enthält, deren Dichte zwischen 0,4 und 1,3 $kg/dm^3$ liegt und mindestens eine Deckschicht aufweist, deren Dichte größer als 1,3 $kg/dm^3$ beträgt. Die Vakuolen werden durch Zugabe von 5 bis 45 Gew.-% eines thermoplastischen Polymers zum Polyesterrohstoff in der Basis und anschließender biaxialer Streckung der Folie erzielt Als thermoplastische Polymere werden u.a. Polypropylen, Polyethylen, Polymethyl-Penten, Polystyrol oder Polycarbonat genannt, wobei Polypropylen das bevorzugte thermoplastische Polymer ist Durch die zusätzliche Deckschicht wird die Herstellbarkeit der Folie besser (keine Streifenbildung auf der Oberfläche der Folie), die Oberflächenspannung wird erhöht und die Rauigkeit der laminierten Oberfläche kann den jeweiligen Erfordernissen angepasst werden. Eine weitere Modifizierung der Folie in der Basisschicht und/oder in den Deckschichten mit Weiß-Pigmenten (in der Regel $TiO_2$) und/oder mit optischen Aufhellern ermöglicht die Anpassung der Folieneigenschaften an die jeweiligen Anwendungserfordernisse. Nachteilig bleibt aber, dass bei der Herstellung der Folie anfallendes Verschnittmaterial (im Wesentlichen ein Gemisch aus Polyesterrohstoff und dem additiven Rohstoff) nicht mehr als Regenerat für die Folienproduktion eingesetzt werden kann, da ansonsten die mit Regenerat produzierte Folie undefiniert in der Farbe verändert wird, was unerwünscht ist. Das Verfahren ist damit aber unwirtschaftlich und die mit Regenerat produzierte Folie mit Verfärbungen konnte sich am Markt nicht durchsetzen. Außerdem weisen die in den Beispielen aufgeführten Folien noch immer zu hohe Rauigkeiten auf und haben damit ein mattes Aussehen (niedriger Glanz), was für viele Anwendungszwecke unerwünscht ist.

In der DE-A 195 40 277 wird eine ein- oder mehrschichtige Polyesterfolie beschrieben, die eine Basisschicht

mit feinen Vakuolen enthält, deren Dichte zwischen 0,6 und 1,3 kg/dm$^3$ liegt und eine Doppelbrechung in der Ebene aufweist, die von -0,02 bis 0,04 reicht. Die Vakuolen werden durch Zugabe von 3 bis 40 Gew.-% eines thermoplastischen Harzes zum Polyesterrohstoff in der Basis und anschließender biaxialer Streckung der Folie erzielt. Als thermoplastische Harze werden u.a. Polypropylen, Polyethylen, Polymethyl-Penten, cyclische Olefin-Polymere; Polyacrylharze, Polystyrol oder Polycarbonat genannt, wobei Polypropylen und Polystyrol bevorzugte Rohstoffe sind. Durch Einhalt der angegebenen Grenzen für die Doppelbrechung der Folie zeichnet sich die beanspruchte Folie insbesondere durch eine überlegene Reißfestigkeit und überlegene Isotropieeigenschaften aus. Nachteilig bleibt aber, dass bei der Herstellung der Folie anfallendes Regenerat nicht mehr für die Folienfertigung eingesetzt werden kann, da ansonsten die Folie undefiniert in der Farbe verändert wird, was unerwünscht ist Das Verfahren ist damit aber unwirtschaftlich und die mit Regenerat produzierte, verfärbte Folie konnte sich am Markt nicht durchsetzen. Außerdem weisen die in den Beispielen aufgeführten Folien noch immer zu hohe Rauigkeiten auf und haben damit ein mattes Aussehen (niedriger Glanz), was für viele Anwendungszwecke unerwünscht ist.

Siegelfähige, biaxial orientierte Polyesterfolien sind nach dem Stand der Technik ebenfalls bekannt. Diese nach dem Stand der Technik bekannten Folien zeichnen sich entweder durch ein gutes Siegelverhalten oder durch eine gute Optik oder durch ein akzeptables Verarbeitungsverhalten aus.

In der GB-A 1 465 973 wird eine koextrudierte, zweischichtige Polyesterfolie beschrieben, deren eine Schicht aus isophthalsäurehaltigen und terephthalsäurehaltigen Copolyestem und deren andere Schicht aus Polyethylenterephthalat besteht. Über das Siegelverhalten der Folie finden sich in der Schrift keine verwertbaren Angaben. Wegen fehlender Pigmentierung ist die Folie nicht prozesssicher herstellbar (Folie ist nicht wickelbar) und nur unter Einschränkung weiter verarbeitbar.

In der EP-A 0 035 835 wird eine koextrudierte siegelfähige Polyesterfolie beschrieben, der zur Verbesserung des Wickel- und Verarbeitungsverhaltens in der Siegelschicht Partikeln beigesetzt werden, deren mittlere Teilchengröße größer ist als die Schichtdicke der Siegelschicht. Durch die teilchenförmigen Zusatzstoffe werden Oberflächenvorsprünge gebildet, die das unerwünschte Blocken und Kleben an Walzen oder Führungen verhindern. Über die andere, nicht siegelfähige Schicht der Folie, werden keine näheren Angaben zur Einarbeitung von Antiblockmitteln gemacht. Es bleibt offen, ob diese Schicht Antiblockmittel enthält. Durch Wahl von Partikeln mit größerem Durchmesser als die Siegelschicht in den in den Beispielen angegebenen Mengen wird allerdings das Siegelverhalten der Folie verschlechtert. Angaben zum Siegeltemperaturbereich der Folie werden in der Schrift nicht gemacht. Die Siegelnahtfestigkeit wird bei 140 °C gemessen und liegt in einem Bereich von 63 bis 120 N/m (0,97 N/15 mm bis 1,8 N/15 mm Folienbreite).

In der EP-A-0 432 886 wird eine koextrudierte, mehrschichtige Polyesterfolie beschrieben, die eine erste Oberfläche besitzt, auf der eine siegelfähige Schicht angeordnet ist, und eine zweite Oberfläche, auf der sich eine Acrylatschicht befindet. Die siegelfähige Deckschicht kann auch hier aus isophthalsäurehaltigen und terephthalsäurehaltigen Copolyestem bestehen. Durch die rückseitige Beschichtung erhält die Folie ein verbessertes Verarbeitungsverhalten. Angaben zum Siegelbereich der Folie werden in der Schrift nicht gemacht. Die Siegelnahtfestigkeit wird bei 140 °C gemessen. Für eine 11 µm dicke Siegelschicht wird eine Siegelnahtfestigkeit von 761,5 N/m (entsprechend 11,4 N/15 mm) angegeben. Nachteilig an der rückseitigen Acrylatbeschichtung ist, dass diese Seite gegen die siegelfähige Deckschicht nicht mehr siegelt. Die Folie ist damit nur sehr eingeschränkt zu verwenden.

In der EP-A-0 515 096 wird eine koextrudierte, mehrschichtige, siegelfähige Polyesterfolie beschrieben, die auf der siegelfähigen Schicht ein zusätzliches Additiv enthält. Das Additiv kann z.B. anorganische Partikeln enthalten und wird vorzugsweise in einer wässrigen Schicht an die Folie bei deren Herstellung herangetragen. Hierdurch soll die Folie die guten Siegeleigenschaften beibehalten und gut zu verarbeiten sein. Die Rückseite enthält nur sehr wenige Partikeln, die hauptsächlich über Regranulat in diese Schicht gelangen. Angaben zum Siegeltemperaturbereich der Folie werden in dieser Schrift nicht gemacht. Die Siegelnahtfestigkeit wird bei 140 °C gemessen und beträgt mehr als 200 N/m (entsprechend 3 N/15 mm). Für eine 3 µm dicke Siegelschicht wird eine Siegelnahtfestigkeit von 275 N/m (entsprechend 4,125 N/15 mm) angegeben.

Aufgabe der vorliegenden Erfindung war es, eine weiße, siegelfähige, und biaxial orientierte Polyesterfolie bereitzustellen, die eine sehr gute Siegelfähigkelt aufweist und die sich mit hoher Wirtschaftlichkeit herstellen läßt. Insbesondere soll gewährleistet sein, dass bei dem Herstellprozeß immanent anfallendes Verschnittmaterial als Regenerat in einer Menge im Bereich von 10 bis 70 Gew.-%, bezogen auf das Gesamtgewicht der Folie, wieder für die Folienfertigung verwendet werden kann, ohne dass dabei die physikalischen Eigenschaften der damit hergestellten Folie nennenswert negativ beeinflusst werden. Insbesondere soll durch die Regeneratzugabe keine nennenswerte Gelbfärbung der Folie auftreten.

Die Aufgabe wird erfindungsgemäß gelöst, durch die Bereitstellung einer weißen, siegelfähigen, biaxial orientierten, koextrudierten Polyesterfolie mit mindestens einer Basisschicht B und einer siegelfähigen Deckschicht A, beide aus thermoplastischem Polyester. Die kennzeichnenden Merkmale dieser Folie sind darin zu sehen, dass zumindest die Basisschicht B zusätzlich ein Cycloolefincopolymer (COC) in einer Menge im Bereich von 2 bis 60 Gew.-%, bezogen auf das Gewicht der Basisschicht B enthält, wobei die Glasübergangstemperatur $T_g$ des Cycloolefincopolymeren (COC) im Bereich von 70 bis 270 °C liegt.

Unter einer weißen, biaxial orientierten Polyesterfolie im Sinne der vorliegenden Erfindung wird eine solche Folie bezeichnet, die einen Weißgrad von mehr als 70 %, bevorzugt von mehr als 75 % und besonders bevorzugt von mehr als 80 %, aufweist. Ferner beträgt die Opazität der erfindungsgemäßen Folie mehr als 55 %, bevorzugt mehr als 60 % und besonders bevorzugt mehr als 65 %.

Zur Erzielung des gewünschten Weißgrades der erfindungsgemäßen Folie muss der Anteil an COC in der Basisschicht B größer als 2 Gew.-% sein, andernfalls ist der Weißgrad kleiner als 70 %. Ist der COC-Gehalt andererseits größer als 60 Gew.-%, so lässt sich die Folie nicht mehr wirtschaftlich herstellen, da sie sich nicht mehr verfahrenssicher strecken lässt.

Weiterhin ist es notwendig, dass die Glasübergangstemperatur $T_g$ des eingesetzten COCs größer als 70 °C ist. Andernfalls (bei einer Glasübergangstemperatur $T_g$ von kleiner als 70 °C) ist das Rohstoffgemisch schlecht verarbeitbar (schlecht extrudierbar), der gewünschte Weißgrad wird nicht mehr erreicht und das eingesetzte Regenerat führt zu einer Folie, die zu einer erhöhten Gelbfärbung neigt. Ist andererseits die Glasübergangstemperatur $T_g$ des ausgewählten COCs größer als 270 °C, so wird sich die Rohstoffmischung im Extruder nicht mehr ausreichend homogen dispergieren lassen. Dies hat dann eine Folie mit inhomogenen Eigenschaften zur Folge.

In der bevorzugten Ausführungsform der erfindungsgemäßen Folie liegt die Glasübergangstemperatur $T_g$ der verwendeten COC's in einem Bereich von 90 bis 250 °C und in der besonders bevorzugten Ausführungsform in einem Bereich von 110 bis 220 °C.

Überraschend wurde gefunden, dass durch den Zusatz eines COCs in der vorstehend beschriebenen Weise eine weiße, opake Folie hergestellt werden kann.

Entsprechend der Menge und der Art des zugegebenen COCs kann der Weißgrad und auch die Opazität der Folie exakt eingestellt und den jeweiligen Anforderungen angepasst werden. Durch diese Maßnahme ist es möglich, auf andere gängige weiß- und opakmachende Additive weitgehend zu verzichten. Vollkommen überraschend war der zusätzliche Effekt, dass das Regenerat nicht wie die polymeren Additive nach dem Stand der Technik zur Gelbverfärbung neigt.

Alle diese beschriebenen Vorteile waren nicht vorhersehbar. Dies umso mehr, da COC's zwar offensichtlich mit Polyethylenterephthalat weitgehend inkompatibel sind, bekanntlich aber mit ähnlichen Streckverhältnissen und Strecktemperaturen orientiert werden, wie Polyethylenterephthalat. Unter diesen Voraussetzungen hätte der Fachmann erwartet, dass bei diesen Herstellbedingungen keine weiße, opake Folie produziert werden kann.

In den bevorzugten und den besonders bevorzugten Ausführungsformen zeichnet sich die erfindungsgemäße Folie durch einen hohen/bzw. durch einen besonders hohen Weißgrad und eine hohe/bzw. durch eine besonders hohe Opazität aus, wobei die Farbänderung der Folie durch die Regeneratzugabe äußerst gering bleibt und damit im hohen Maße wirtschaftlich ist

Die erfindungsgemäße Folie ist mehrschichtig. Mehrschichtige Ausführungsformen sind mindestens zweischichtig und umfassen immer die COC-haltige Basisschicht B und zumindest eine siegelfähige Deckschicht A. In einer bevorzugten Ausführungsform bildet die COC-haltige Schicht die Basisschicht B der Folie mit mindestens einer siegelfähigen Deckschicht A, wobei gegebenenfalls einseitig eine oder beidseitig Zwischenschicht/en vorhanden sein kann/können. In einer weiteren bevorzugten Ausführungsform bildet die COC-haltige Schicht die Basisschicht B der Folie mit mindestens einer siegelfähigen Deckschicht A und vorzugsweise mit einer weiteren Deckschicht C, wobei gegebenenfalls einseitig eine oder beidseitig Zwischenschicht/en vorhanden sein kann/können. In einer weiteren möglichen Ausführungsform bildet die COC-haltige Schicht auch eine Zwischenschicht der Mehrschichtfolie. Weitere Ausführungsformen mit COC-haltigen Zwischenschichten sind fünfschichtig aufgebaut und haben neben der COC-haltigen Basisschicht B beidseitig COC-haltige Zwischenschichten. In einer weiteren Ausführungsform kann die COC-haltige Schicht zusätzlich zur Basisschicht B, einseitig eine Deckschicht auf der Basis- oder Zwischenschicht bilden. Die Basisschicht B ist im Sinne der vorliegenden Erfindung diejenige Schicht, deren Dicke mehr als 30 bis 99,5 %, vorzugsweise 60 bis 95 %, der Gesamtfoliendicke ausmacht. Die Deckschicht/en ist/sind die Schicht/en, welche die äußere (n) Schicht/en der Folie bildet/n.

Die optionale weitere Deckschicht C kann wie die Deckschicht A siegelfähig sein oder wie die Basisschicht B COC enthalten, sie kann aber auch weitere Ausstattungsmerkmale wie z.B. eine matte oder besonders raue oder besonders glatte Oberfläche aufweisen. Sie kann aber z.B. auch hochglänzend sein.

Es hat sich dabei weiterhin herausgestellt, dass die Folie bereits einen besonders hohen Glanz aufweist, wenn die nicht siegelfähige Deckschicht C genauso aufgebaut ist wie die Basisschicht B bzw. die Basisschicht B gleichzeitig (bei einem zweischichtigen Aufbau) die nicht siegelfähige Außenschicht darstellt. Der Glanz der so erhaltenen Folie beträgt mehr als 50 bevorzugt mehr als 70 und besonders bevorzugt mehr als 90.

Die COC-haltige Basisschicht B der erfindungsgemäßen Folie enthält einen Polyesterrohstoff, vorzugsweise ein Polyesterhomopolymeres, ein COC sowie gegebenenfalls weitere zugesetzte Additive in jeweils wirksamen Mengen. Im allgemeinen enthält diese Schicht mindestens 20 Gew.-%, vorzugsweise 40 bis 98 Gew. -%, insbesondere 70 bis 96 Gew. -%, Polyesterrohstoff, bezogen auf das Gewicht der Schicht.

Die Basisschicht B der Folie enthält einen thermoplastischen Polyester. Dafür geeignet sind Polyester aus

Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethyl-cyclohexan und Terephthalsäure (=Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Deckschicht A und/oder der Deckschicht C der mehrschichtigen ABC-Folie (B=Basisschicht) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)-$, -O-, -S- oder $-SO_2-$ steht. Daneben sind auch Bisphenole der Formel $HO-C_6H_4-C_6H_4-OH$ gut geeignet.

Geeignete andere aromatische Dicarbonsäuren sind bevorzugt Benzoldicarbonsäuren, Naphtalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_{3-}C_{19})$-Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Erfindungsgemäß enthält/enthalten die COC-haltige Schicht/en ein Cycloolefincopolymeres (COC) in einer Menge von minimal 2,0 Gew.-%, bevorzugt 4 bis 50 Gew.-% und besonders bevorzugt 6 bis 40 Gew.-%, bezogen auf das Gewicht der COC-haltigen Schicht. Es ist wesentlich für die vorliegende Erfindung, dass das COC mit dem Polyethylenterephthalat nicht verträglich ist und mit diesem keine homogene Mischung bildet.

Cycloolefinpolymere sind Homopolymerisate oder Copolymerisate, welche polymerisierte Cycloolefineinheiten und gegebenenfalls acyclische Olefine als Comonomer enthalten. Für die vorliegende Erfindung sind Cycloolefinpolymere geeignet, die 0,1 bis 100 Gew.-%, bevorzugt 10 bis 99 Gew.-%, besonders bevorzugt 50 bis 95 Gew.-%, jeweils bezogen auf die Gesamtmasse des Cycloolefinpolymeren, polymerisierte Cycloolefineinheiten enthalten. Bevorzugt sind insbesondere Polymere, die aus den Monomeren der cyclischen Olefinen der Formeln I, II, III, IV, V oder VI aufgebaut sind:

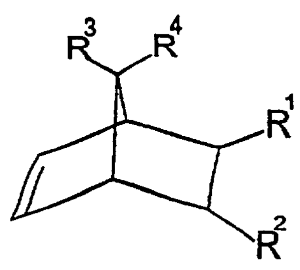 (I)

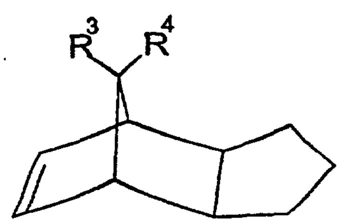 (II)

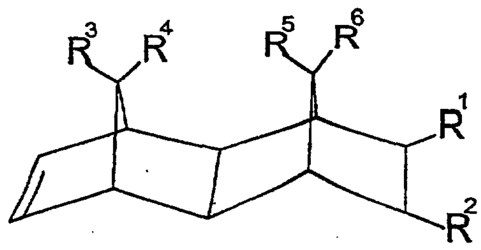

(III)

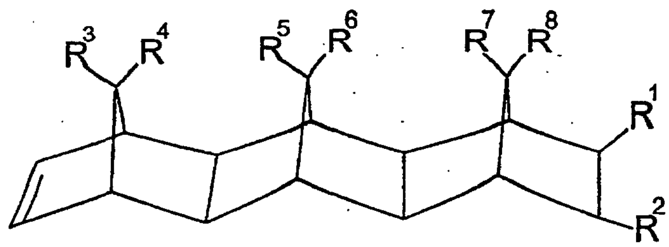

(IV)

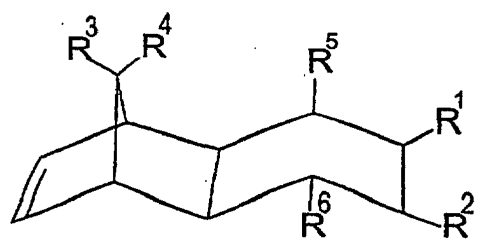

(V)

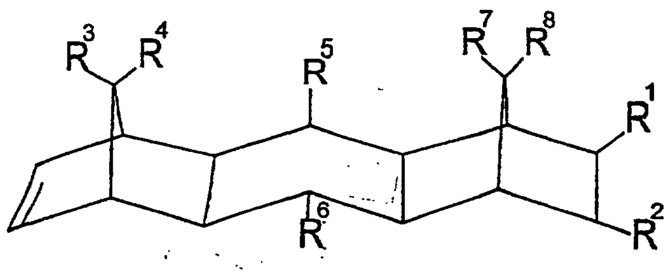

(VI)

In diesen Formeln sind $R^1$, $R^2$, $R^3$, $R^4$, $R^5$, $R^6$, $R^7$ und $R^8$ unabhängig voneinander gleich oder verschieden und bedeuten ein Wasserstoffatom oder einen $C_1$-$C_{30}$-Kohlenwasserstoffrest; oder zwei oder mehrere der Reste $R^1$ bis $R^8$ sind cyclisch verbunden, wobei gleiche Reste in den verschiedenen Formeln gleiche oder unterschiedliche Bedeutung haben. $C_1$-$C_{30}$-Kohlenwasserstoffreste sind bevorzugt lineare oder verzweigte $C_1$-$C_8$-Alkylreste, $C_6$-$C_{18}$-Arylreste, $C_7$-$C_{20}$-Alkylenarylreste oder cyclische $C_3$-$C_{20}$-Alkylreste oder acyclische $C_2$-$C_{20}$-Alkenylreste.

Gegebenenfalls können die Cycloolefinpolymere 0 bis 45 Gew.-%, bezogen auf die Gesamtmasse des Cycloolefinpolymeres, polymerisierte Einheiten mindestens eines monocyclischen Olefins der Formel VII enthalten:

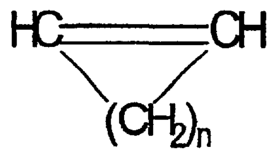

(VII)

Hierin ist n eine Zahl von 2 bis 10.

Gegebenenfalls können die Cycloolefinpolymere 0 bis 99 Gew.-%, bezogen auf die Gesamtmasse des Cycloolefinpolymeren, polymerisierte Einheiten eines acyclischen Olefins der Formel VIII enthalten:

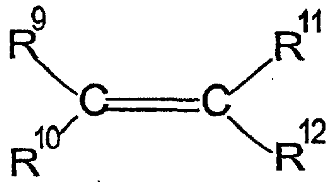

(VIII)

Hierin sind $R^9$, $R^{10}$, $R^{11}$, und $R^{12}$ unabhängig voneinander gleich oder verschieden und bedeuten ein Wasserstoffatom oder $C_1$-$C_{10}$-Kohlenwasserstoffrest, bevorzugt einen $C_1$-$C_8$-Alkylrest oder $C_6$-$C_{14}$-Arylrest.

Ebenfalls prinzipiell geeignet sind Cycloolefinpolymere, die durch ringöffnende Polymerisation mindestens eines der Monomeren der Formeln I bis VI und anschließende Hydrierung erhalten werden.

Cycloolefinhomopolymere sind aus einem Monomeren der Formeln I bis VI aufgebaut Diese Cycloolefin-Polymere sind für die Zwecke der vorliegenden Erfindung weniger geeignet. Für die Zwecke der vorliegenden Erfindung sind solche Cycloolefincopolymerisate (COC) geeignet, die mindestens ein Cycloolefin der Formeln I bis VI und zusätzlich acyclische Olefine der Formel VIII als Comonomer enthalten. Im vorstehenden wie im nachfolgenden werden diese erfindungsgemäß verwendbaren Cycloolefincopolymerisate COC genannt. Dabei sind als acyclische Olefine solche bevorzugt, die 2 bis 20 C-Atome aufweisen, insbesondere unverzweigte acyclische Olefine mit 2 bis 10 C-Atomen wie beispielsweise Ethylen, Propylen und/oder Butylen. Der Anteil polymerisierter Einheiten acyclischer Olefine der Formel VIII beträgt bis zu 99 Gew.-%, bevorzugt 5 bis 80 Gew.-%, besonders bevorzugt 10 bis 60 Gew.-%, bezogen auf das Gesamtgewicht des jeweiligen COCs.

Unter den vorstehend beschriebenen COCs sind insbesondere diejenigen bevorzugt, die polymerisierte Einheiten polycyclischer Olefine mit Norbornengrundstruktur, besonders bevorzugt Norbomen oder Tetracyclododecen, enthalten. Besonders bevorzugt sind auch COCs, die polymerisierte Einheiten acyclischer Olefine, insbesondere Ethylen, enthalten. Wiederum besonders bevorzugt sind Norbonen/Ethylen- und Tetracyclododecen/Ethylen-Copolymere, welche 5 bis 80 Gew.-%, vorzugsweise 10 bis 60 Gew.-% enthalten (bezogen auf das Gewicht des Copolymeren).

Die vorstehend generisch beschriebenen COCs weisen im allgemeinen Glasübergangstemperaturen $T_g$ zwischen -20 °C und 400 °C auf. Für die Erfindung sind COCs verwendbar, die eine Glasübergangstemperatur $T_g$ von größer als 70 °C, vorzugsweise größer als 90 °C und insbesondere größer als 110 °C aufweisen. Die Viskositätszahl (Dekalin, 135 °C, DIN 53 728) liegt zweckmäßig zwischen 0,1 und 200 ml/g, bevorzugt zwischen 50 und 150 ml/g.

Die Herstellung der COCs geschieht durch eine heterogene oder homogene Katalyse mit metallorganischen Verbindungen und ist in zahllosen Dokumenten beschrieben. Geeignete Katalysatorsysteme basierend auf Mischkatalysatoren aus Titan- bzw. Zirkon- oder Vanadiumverbindungen in Verbindung mit Aluminiumorganylen werden in DD 109 224, DD 237 070 und EP-A-0 156 464 beschrieben. EP-A-0 283 164, EP-A-0 407 870, EP-A-0 485 893 und EP-A-0 503 422 beschreiben die Herstellung von Cycloolefincopolymeren (COC) mit Katalysatoren, basierend auf löslichen Metallocenkomplexen. Auf die in obengenannten Schriften beschriebenen Herstellungsverfahren von Cycloolefinpolymeren wird hiermit ausdrücklich Bezug genommen.

Die COCs werden entweder als reines Granulat oder als granuliertes Konzentrat (Masterbatch) in die Folie eingearbeitet, indem das Polyestergranulat oder -pulver mit dem COC bzw. dem COC-Masterbatch vorgemischt und anschließend dem Extruder zugeführt wird. Im Extruder werden die Komponenten weiter vermischt und auf Verarbeitungstemperatur erwärmt. Dabei ist es für das erfindungsgemäße Verfahren zweckmäßig, dass die Extrusionstemperatur oberhalb der Glasübergangstemperatur $T_g$ des COCs liegt, im allgemeinen mindestens 5 K, vorzugsweise 10 bis 180 K, insbesondere 15 bis 150 K, über der Glasübergangstemperatur $T_g$ des Cycloolefincopolymeren (COC).

Für die Zwischenschichten und ggf. die Deckschicht C können prinzipiell die gleichen Polymere verwendet werden, wie für die zuvor beschriebene Basisschicht B. Daneben kann diese Deckschicht C und ggf. die Zwischenschichten auch andere Materialien enthalten, wobei dann diese Deckschicht C und ggf. die Zwischenschichten bevorzugt aus einem Gemisch von Polymeren, einem Copolymeren oder einem Homopolymeren bestehen, welche Ethylen-2,6-naphthalat-Einheiten und Ethylenterephthalat-Einheiten enthalten.

Die durch Koextrusion auf die Basisschicht B aufgebrachte siegelfähige Deckschicht A ist auf Basis von Polyestercopolymeren aufgebaut und besteht im wesentlichen aus Copolyestem, die überwiegend aus einem Mix aus Isophthalsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht B vorkommen können. Die bevorzugten Copolyester, die die gewünschten Siegeleigenschaften bereitstellen, sind solche, die aus Ethylenterephthalat-, aus Ethylenisophthalat-Einheiten und aus Ethylenglykol-Einheiten aufgebaut sind. Der Anteil an Ethylenterephthalat beträgt 40 bis 95 mol-% und der entsprechende Anteil an Ethylenisophthalat 60 bis 5 mol-%. Bevorzugt sind Copolyester, bei denen der Anteil an Ethylenterephthalat 50 bis 90 mol-% und der entsprechende Anteil an Ethylenisophthalat 50 bis 10 mol-% beträgt und ganz bevorzugt sind Copolyester, bei denen der Anteil an Ethylenterephthalat 60 bis 85 mol-% und der entsprechende Anteil an Ethylenisophthalat 40 bis 15 mol-% beträgt.

Die Gesamtdicke der Folie kann innerhalb weiter Grenzen variieren und richtet sich nach dem beabsichtigten Verwendungszweck. Die bevorzugten Ausführungsformen der erfindungsgemäßen Folie haben Gesamtdicken von 4 bis 500 μm, wobei 8 bis 300 μm, insbesondere 10 bis 300 μm, bevorzugt sind. Die Dicke der gegebenenfalls vorhandenen Zwischenschicht/en beträgt im allgemeinen jeweils unabhängig voneinander 0,5 bis 15 μm, wobei Zwischenschichtdicken von 1 bis 10 μm, insbesondere 1 bis 8 μm, bevorzugt sind. Die angegebenen Werte beziehen sich jeweils auf eine Zwischenschicht. Die Dicke der Deckschicht/en wird unabhängig von den anderen Schichten gewählt und liegt bevorzugt im Bereich von 0,1 bis 10 μm, insbesondere 0,2 bis 5 μm, vorzugsweise 0,3 bis 2 μm, wobei beidseitig aufgebrachte Deckschichten bezüglich Dicke und Zusammensetzung gleich oder verschieden sein können. Die Dicke der Basisschicht B ergibt sich entsprechend aus der Differenz von Gesamtdicke der Folie und der Dicke der aufgebrachten Deck- und Zwischenschicht/en und kann daher analog der Gesamtdicke innerhalb weiter Grenzen variieren.

Die Basisschicht B und die anderen Schichten können zusätzlich übliche Additive, wie Stabilisatoren, Antiblockmittel und andere Füller, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikeln, beispielsweise Calciumcarbonat, amorphe Kieselsäure, $SiO_2$ in kolloidaler und in kettenartiger Form, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vemetzte Polymerpartikel, z.B. Polystyrol- oder Acrylat-Partikeln.

Als Additive können auch Mischungen von zwei und mehreren verschiedenen Antiblockmitteln oder Mischungen von Antiblockmitteln gleicher Zusammensetzung, aber unterschiedlicher Partikelgröße gewählt werden. Die Partikeln können den Polymeren der einzelnen Schichten der Folie in den jeweils vorteilhaften Mengen, z.B. als glykolische Dispersion während der Polykondensation oder über Masterbatche bei der Extrusion zugegeben werden. Als besonders geeignet haben sich Pigmentkonzentrationen von 0 bis 25 Gew.-% erwiesen (bezogen auf das Gewicht der jeweiligen Schicht). Eine detaillierte Beschreibung der Antiblockmittel findet sich beispielsweise in der EP-A-0 602 964.

Zu Verbesserung des Weißgrades der Folie kann die Basisschicht B oder die anderen zusätzlichen Schichten eine weitere Pigmentierung enthalten. Hierbei hat es sich als besonders günstig erwiesen, als zusätzliche Additive Bariumsulfat in einer Komgröße im Bereich von 0,3 bis 0,8 μm, vorzugsweise von 0,4 bis 0,7 μm oder Titandioxid in einer Komgröße von 0,05 bis 0,3 μm, gemessen jeweils nach der Sedigraphmethode, auszuwählen. Die Folie erhält hierdurch ein brillantes, weißes Aussehen. Die Menge an Bariumsulfat liegt im Bereich von 1 bis 25 Gew.-%, vorzugsweise von 1 bis 20 Gew.-%, und ganz bevorzugt von 1 bis 15 Gew.-%.

Die Deckschichten können prinzipiell die erfindungsgemäßen oben angegebenen Additivkonzentrationen enthalten. Als besonders günstig haben sich aber die folgenden Ausführungsformen erwiesen:

Die niedrigste Siegelanspringtemperatur und die höchste Siegelnahtfestigkeit wird erreicht, wenn für die siegelfähige Deckschicht A die oben näher beschriebenen Copolymere verwendet werden. Die besten Siegeleigenschaften der Folie erhält man, wenn dem Copolymeren gar keine weiteren Additive, insbesondere keine anorganischen oder organischen Füllstoffe zugegeben werden. Für diesen Fall erhält man bei vorgegebenem Copolyester die niedrigste Siegelanspringtemperatur und die höchsten Siegelnahtfestigkeiten. Allerdings ist in diesem Fall das Handling der Folie nicht optimal, da die Oberfläche der siegelfähigen Deckschicht A zum Verblocken neigt.

Als besonders günstig hat es sich daher erwiesen, wenn zur Verbesserung des Handlings der Folie und der Verarbeitbarkeit die siegelfähige Deckschicht A modifiziert wird. Dies geschieht bevorzugt mit Hilfe von geeigneten Antiblockmitteln einer ausgewählten Größe, die der Siegelschicht in einer bestimmten Menge zugegeben werden und zwar derart, dass einerseits das Verblocken minimiert und andererseits die Siegeleigenschaften nur unmerklich verschlechtert werden. Diese gewünschte Eigenschaftskombination lässt sich erreichen, wenn die Topographie der siegelfähigen Deckschicht A bevorzugt durch den folgenden Satz von Parametern gekennzeichnet ist:

- Die Rauigkeit der siegelfähigen Deckschicht, ausgedrückt durch den $R_a$-Wert, sollte kleiner als 100 nm und bevorzugt ≤ 80 nm sein. Im anderen Fall werden die Siegeleigenschaften im Sinne der vorliegenden Erfindung negativ beeinflusst.
- Der Messwert für die Oberflächengasströmungszeit sollte bevorzugt im Bereich von 50 bis 4000 s liegen. Bei Werten unterhalb von 50 s werden die Siegeleigenschaften im Sinne der vorliegenden Erfindung negativ beeinflusst und bei Werten oberhalb von 4000 s wird das Handling der Folie schlecht.

Als besonders günstig für das Verarbeitungsverhalten hat es sich erwiesen, wenn die Folie zusätzlich eine Deckschicht C aufweist, deren Topographie bevorzugt durch den folgenden Satz von Parametern gekennzeichnet sein soll:

- Der Reibungskoeffizient (COF) dieser Seite gegen sich selbst sollte bevorzugt kleiner als 0,7 und besonders bevorzugt ≤ 0,6 sein. Andernfalls ist das Wickelverhalten und die Weiterverarbeitung der Folie weniger gut.
- Die Rauigkeit der nicht siegelfähigen Deckschicht, ausgedrückt durch den $R_a$-Wert, sollte ≥ 30 nm. Kleinere Werte als 30 nm haben negative Auswirkungen auf das Wickel- und Verarbeitungsverhalten der Folie.
- Der Messwert für die Oberflächengasströmungszeit sollte günstig im Bereich unterhalb von 500 s liegen. Bei Werten ab 500 s wird nämlich das Wickel- und das Verarbeitungsverhalten der Folie negativ beeinflusst.

Zur Erzielung dieses besonders günstigen Eigenschaftsprofils der Folie weist die Folie eine Deckschicht C auf, die eine größere Menge an Pigmenten (d.h. höhere Pigmentkonzentration) als die Deckschicht A enthält. Die Pigmentkonzentration in dieser zweiten Deckschicht C liegt zwischen 0,1 und 10 Gew.-%, vorteilhaft zwischen 0,12 und 8 Gew.- % und insbesondere zwischen 0,15 und 6 Gew.-%. Die andere, der Deckschicht C gegenüberliegende, siegelfähige Deckschicht A ist dagegen mit einer geringeren Menge an inerten Pigmenten gefüllt. Die Konzentration der inerten Partikeln innerhalb der Schicht A liegt günstig zwischen 0,01 und 0,3 Gew.-%, vorzugsweise zwischen 0,015 und 0,2 Gew.-% und insbesondere zwischen 0,02 und 0,1 Gew.-%.

Die Erfindung betrifft weiterhin ein Verfahren zur Herstellung der erfindungsgemäßen weißen, siegelfähigen Polyesterfolie nach dem an sich bekannten Extrusions- oder Koextrusionsverfahren.

Im Rahmen dieses Verfahrens wird so vorgegangen, dass die den einzelnen Schichten der Folie entsprechenden Schmelzen durch eine Flachdüse koextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an einer zur Behandlung vorgesehenen Oberflächenschicht corona- oder flammbehandelt und dann aufgewickelt wird.

Die biaxiale Streckung wird im allgemeinen sequentiell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) gestreckt. Gegebenenfalls kann nach der Querstreckung noch eine weitere Längsstrekkung erfolgen. Das Strecken führt zu einer räumlichen Orientierung der Molekülketten des Polyesters. Das Strecken in Längsrichtung erfolgt bevorzugt mit Hilfe mehrerer entsprechend dem angestrebten Streckverhältnis mit unterschiedlichen Winkelgeschwindigkeiten rotierender Walzen. Zum Querstrecken benutzt man allgemein einen entsprechenden Kluppenrahmen.

Die Temperatur, bei der die Streckung durchgeführt wird, kann in einem relativ großen Fenster variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1.

Die Streckung kann auch in einem Simultanstreckrahmen (Simultanstreckung) erfolgen, wobei die Anzahl der Streckschritte und die Abfolge (längs/quer) nicht von entscheidender Bedeutung für das Eigenschaftsbild der Folie ist. Günstig sind jedoch hier Strecktemperaturen ≤ 125 °C und besonders günstig ≤ 115 °C. Die Streckverhältnisse entsprechen denen im herkömmlichen sequenziellen Prozess.

Bei der nachfolgenden Thermofixierung wird die Folie über einen Zeitraum von etwa 0,1 bis 10 s bei einer Temperatur von 150 bis 250 °C gehalten. Anschließend wird die Folie in üblicher Weise aufgewickelt.

Zur Einstellung weiterer gewünschter Eigenschaften kann die Folie chemisch behandelt werden oder auch corona- bzw. flammbehandelt sein. Die Behandlungsintensität ist so einzustellen, dass die Oberflächenspannung der Folie im allgemeinen über 45 mN/m liegt.

Ebenso kann die Folie zur Einstellung weiterer Eigenschaften beschichtet werden. Typische Beschichtungen sind haftvermittelnde, antistatisch, schlupfverbessernd oder dehäsiv wirkende Schichten. Es bietet sich an, diese zusätzlichen Schichten nach der Technik des so genannten »in-line coating« mittels wässriger Dispersionen nach der Längsstreckung und vor der Querstreckung auf die Folie aufzubringen.

Der besondere Vorteil der erfindungsgemäßen Folie drückt sich durch einen hohen Weißgrad bei gleichzeitig hervorragender Siegelfähigkeit aus. Der Weißgrad der Folie beträgt mehr als 70 %, bevorzugt mehr als 75 % und besonders bevorzugt mehr als 80 %. Die Opazität der erfindungsgemäßen Folie beträgt mehr als 55 %, bevorzugt mehr als 60 % und besonders bevorzugt mehr als 65 %.

Besonders hervorzuheben ist aber der wirtschaftlich bedeutende und besonders überraschende Vorteil, dass nämlich bei der Herstellung der Folie immanent anfallendes Verschnittmaterial als Regenerat in einer Menge im Bereich von 10 bis 70 Gew.-%, bezogen auf das Gesamtgewicht der Folie, wieder für die Folienherstellung verwendet werden kann, ohne dass dabei die physikalischen Eigenschaften der so hergestellten Folie nennenswert negativ beeinflusst werden. Insbesondere wird durch das Regenerat (im Wesentlichen aus Polyesterrohstoff und COC bestehend) die Folie nicht undefiniert in der Farbe verändert, was bei den Folien nach dem Stand der Technik stets der Fall ist.

Die Folie eignet sich auf Grund ihres sehr guten Handlings und auf Grund ihrer sehr guten Verarbeitungseigenschaften insbesondere für die Verarbeitung auf schnelllaufenden Maschinen.

Darüber hinaus eignet sich die Folie auf Grund ihrer hervorragenden Eigenschaftskombinationen für eine Vielzahl verschiedener Anwendungen, beispielsweise für Innenraumverkleidungen, für den Messebau und Messeartikel, als Displays, für Schilder, für Schutzverglasungen von Maschinen und Fahrzeugen, im Beleuchtungssektor, im Laden- und Regalbau, als Werbeartikel und als Kaschiermedium.

Die nachstehende Tabelle (Tabelle 1) fasst die wichtigsten erfindungsgemäßen Folieneigenschaften noch einmal auf einen Blick zusammen.

Tabelle 1

| Parameter | erfindungsgemäßer Bereich | bevorzugt | besonders bevorzugt | Einheit | Messmethode |
|---|---|---|---|---|---|
| Deckschicht A | | | | | |
| Siegelanspringtemperatur | <200 | <180 | <160 | °C | intern |
| Siegelnahtfestigkeit | >0,8 | >1 | >1,2 | N/15mm | intern |
| Mittlere Rauigkeit $R_a$ | <100 | <80 | <60 | nm | DIN 4768, Cutt-off von o,25 mm |
| Messwert f.d. Ofl. -Gasströmungszeit | 50-4000 | 200-3500 | 500-3000 | sec | intern |
| Glanz, 60 ° | >50 | >70 | >90 | | DIN 67 530 |
| Deckschicht C bzw. Basisschicht B, wenn Außenschicht | | | | | |
| COF | <0,7 | <0,6 | <0,40 | | DIN 53 375 |
| Mittlere Rauigkeit $R_a$ | >30 | >45 | >50 | nm | DIN 4768, Cutt-off von o,25 mm |
| Messwert f.d. Ofl.-gasströmungszeit | <500 | <400 | <300 | sec | intern |
| Glanz, 60 ° | <50 | >70 | >90 | | DIN 67 530 |
| weitere Folieneigenschaften | | | | | |
| Weißgrad | >70 | >75 | >80 | % | Berger |
| Opazität | >55 | >60 | >65 | % | DIN 53 146 |

Zur Charakterisierung der Rohstoffe und der Folien wurden im Rahmen der vorliegenden Erfindung die folgenden Messmethoden benutzt:

**SV-Wert (standard viscosity)**

Die Standardviskosität SV (DCE) wird, angelehnt an DIN 53726, in Dichloressigsäure gemessen.

Die intrinsische Viskosität (IV) berechnet sich wie folgt aus der Standardviskosität

$$IV\ (DCE) = 6{,}67 \cdot 10^{-4}\ SV\ (DCE) + 0{,}118$$

**Reibung (COF)**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der sogenannten Tintenmethode (DIN 53 364) bestimmt.

**Rauigkeit**

Die Rauigkeit $R_a$ der Folie wurde nach DIN 4768 bei einem Cut-off von 0,25 mm bestimmt.

**Weißgrad und Opazität**

Die Bestimmung des Weißgrades und der Opazität erfolgt mit Hilfe des elektrischen Remissionsphotometers "ELREPHO" der Firma Zeiss, Oberkochem (DE), Normlichtart C, 2° Normalbeobachter. Die Opazität wird nach DIN 53146 bestimmt. Der Weißgrad wird als WG = RY + 3RZ - 3RX definiert.
WG = Weißgrad, RY, RZ, RX = entsprechende Reflexionsfaktoren bei Einsatz des Y-, Z- und X-Farbmessfilters. Als Weißstandard wir ein Pressling aus Bariumsulfat (DIN 5033, Teil 9) verwendet. Eine ausführliche Beschreibung ist z.B. in Hansl Loos "Farbmessung", Verlag Beruf und Schule, Itzehoe (1989), beschrieben.

**Lichtdurchlässigkeit**

Die Lichtdurchlässigkeit wird in Anlehnung an ASTM-D 1033-77 gemessen.

**Glanz**

Der Glanz wurde nach DIN 67 530 bei einem Messwinkel von 60° bestimmt. Gemessen wurde der Reflektorwert als optische Kenngröße für die Oberfläche einer Folie. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muß mit dem Einstrahlwinkel angegeben werden.

**Glasübergangstemperatur $T_g$**

Die Glasübergangstemperatur $T_g$ wurde anhand von Folienproben mit Hilfe der DSC (Differential Scanning Calorimetry) bestimmt (DIN 73 765). Verwendet wurde ein DSC 1090 der Fa. DuPont. Die Aufheizgeschwindigkeit betrug 20 K/min und die Einwaage ca. 12 mg. Im ersten Aufheizvorgang wurde der Glasübergang ermittelt. Die Proben zeigten vielfach eine Enthalpierelaxation (ein Peak) zu Beginn des stufenförmigen Glasübergangs. Als $T_g$ wurde die Temperatur genommen, bei der die stufenförmige Veränderung der Wärmekapazität - unabhängig von der peakförmigen Enthalpierelaxation - ihre halbe Höhe im ersten Aufheizvorgang erreichte. In allen Fällen wurde nur eine einzige Glasübergangsstufe im Thermogramm beim ersten Aufheizen beobachtet.

**Siegelanspringtemperatur (Mindestsiegeltemperatur)**

Mit dem Siegelgerät HSG/ET der Firma Brugger werden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 s gesiegelt wird. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Siegelanspringtemperatur ist die Temperatur, bei der eine Siegelnahtfestigkeit von mindestens 0,5 N/15 mm erreicht wird.

**Siegelnahtfestigkeit**

Zur Bestimmung der Siegelnahtfestigkeit wurden zwei 15 mm breite Folienstreifen übereinandergelegt und bei 130 °C, einer Siegelzeit von 0,5 s und einem Siegeldruck von 2 bar (Gerät: Brugger Typ NDS, einseitig beheizte Siegelbacke) versiegelt. Die Siegelnahtfestigkeit wurde nach der T-Peel-Methode bestimmt.

**Oberflächengasströmungszeit**

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.

Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezeptienten einen Druckanstieg von 56 mbar zu bewirken.

| | | |
|---|---|---|
| Messbedingungen | Messfläche | 45,1 $cm^2$ |
| | Anpressgewicht | 1276 g |
| | Lufttemperatur | 23 °C |
| | Luftfeuchte | 50 % relative Feuchte |
| | Gassammelvolumen | 1,2 $cm^3$ |
| | Druckintervall | 56 mbar |

**Beispiel 1**

Nach der Koextrusions-Technologie wurde eine 23 µm dicke mehrschichtige Folie mit der Schichtreihenfolge A-B hergestellt, wobei B die Basisschicht und A die Deckschicht darstellte. Die Basisschicht B war 21,5 µm dick und die Deckschicht 1,5 µm.

Chips aus Polyethylenterephthalat (hergestellt über das Umesterungsverfahren mit Mn als Umesterungskatalysator, Mn-Konzentration: 100 ppm) wurden bei 150 °C auf eine Restfeuchte von unterhalb 100 ppm getrocknet und dem Extruder für die Basisschicht B zugeführt. Daneben wurden Chips aus Cycloolefincopolymeren (COC) der Fa. Ticona: ®Topas 6015 (COC bestehend aus 2-Norbornen und Ethylen, siehe auch W. Hatke: Folien aus COC, Kunststoffe 87 (1997) 1, S. 58-62) mit einer Glasübergangstemperatur $T_g$ von 160 °C ebenfalls dem Extruder für die Basisschicht B zugeführt. Der mengenmäßige Anteil des Cycloolefincopolymeren (COC) an der Basisschicht betrug 10 Gew.-%.

Der Deckschicht wurden 97 Gew.-% Chips eines linearen Polyesters zugeführt, der aus einem amorphen Copolyester mit 78 mol-% Ethylenterephthalat und 22 mol-% Ethylenisophthalat bestand (hergestellt über das Umesterungsverfahren mit Mn als Umesterungskatalysator, Mn-Konzentration: 100 ppm). Der Copolyester wurde bei einer Temperatur von 100 °C auf eine Restfeuchte von unterhalb 200 ppm getrocknet und dem Extruder für die siegelfähige Deckschicht A zugeführt. Außerdem wurden dem Extruder 3 Gew.-% Chips eines Masterbatches zugeführt, das neben Polyester 10.000 ppm Siliciumdioxid (®Sylobloc, Grace, Deutschland) und 12500 ppm Siliciumdioxid (®Aerosil, pyrogenes $SiO_2$ der Fa. Degussa) enthielt. Auch diese Chips wurden bei 100 °C auf eine Restfeuchte von unterhalb 200 ppm getrocknet.

Es wurde durch Koextrusion und anschließende stufenweise Orientierung in Längs- und Querrichtung eine weiße, opake zweischichtige Folie mit einer Gesamtdicke von 23 µm hergestellt.

Basisschicht B, Mischung aus:

| | |
|---|---|
| 90,0 Gew.-% | Polyethylenterephthalat-Homopolymer (RT49, Kosa, Deutschland) . |
| 10,0 Gew.-% | Cycloolefincopolymeren (COC) der Fa. Ticona, ®Topas 6015 |

Die Herstellungsbedingungen in den einzelnen Verfahrensschritten waren:

| | | |
|---|---|---|
| Extrusion | Temperaturen der Basis- und der Deckschicht | 280 °C |
| | Temperatur der Abzugswalze | 30 °C |

(fortgesetzt)

| | | |
|---|---|---|
| Längsstreckung | Temperatur | 80-125°C |
| | Längsstreckverhältnis | 4,2 |
| Querstreckung | Temperatur | 80 - 135 °C |
| | Querstreckverhältnis | 4,0 |
| Fixierung | Temperatur | 230 °C |
| | Dauer | 3 s |

Diese Verfahrensparameter gelten für alle Beispiele (ohne Vergleichsbeispiele).

Die Folie hatte die geforderten guten Eigenschaften und zeigte das gewünschte Handling und das gewünschte Verarbeitungsverhalten. Die erzielten Eigenschaften derart hergestellter Folien sind in den Tabellen 2 und 3 dargestellt.

**Beispiel 2**

Im Vergleich zu Beispiel 1 wurde jetzt in die Basisschicht B 50 Gew.-% Regenerat dazugegeben. Die Menge an COC in der damit hergestellten Basisschicht B betrug wiederum 10 Gew.-%. Die Verfahrensparameter wurden im Vergleich zu Beispiel 1 nicht geändert. Die Deckschicht A blieb unverändert. Es wurde die Gelbverfärbung der Folie visuell beobachtet. Anhand der Tabellen 2 und 3 sieht man, dass kaum eine Gelbverfärbung der Folie sichtbar geworden ist.

Basisschicht B, Mischung aus:

| | |
|---|---|
| 44,7 Gew.-% | Polyethylenterephthalat-Homopolymer mit einem SV-Wert von 800 |
| 50,0 Gew.-% | Regenerat (Polymeranteil: 90,7 Gew.-% Polyester inklusive Isophthalat + 9,3 Gew.-% Topas 6015) |
| 5,3 Gew.-% | Cycloolefincopolymeren (COC) der Fa. Ticona, Topas 6015 |

**Beispiel 3**

Die Basisschicht B wurde aufgebaut wie in Beispiel 1 war aber nur 20 µm dick. Die siegelfähige Deckschicht A entsprach in Dicke und Zusammensetzung Beispiel 1. Zusätzlich wurde eine dritte 1,5 µm dicke Deckschicht C mit koextrudiert (Trocknung wie Deckschicht A).

Diese Deckschicht C enthielt:

| | |
|---|---|
| 88 Gew.-% | Polyethylenterephthalat-Homopolymer mit einem SV-Wert von 800 |
| 12 Gew.-% | Masterbatch aus Polyester und 10.000 ppm Siliciumdioxid (®Sylobloc, Grace, Deutschland) und 12500 ppm Siliciumdioxid (®Aerosil, pyrogenes $SiO_2$ der Fa. Degussa) |

Die sonstigen Prozessbedingungen entsprachen Beispiel 1.

Die Folie wies die gleichen guten Eigenschaften hinsichtlich Weißgrad und Siegelfähigkeit auf wie die Folie aus Beispiel 1 und 2, zeigte aber ein noch besseres Verarbeitungsverhalten. Die erzielten Eigenschaften derart hergestellter Folien sind in den Tabellen 2 und 3 dargestellt.

**Beispiel 4**

Es wurde verfahren wie in Beispiel 3 aber der Basisschicht B wurden 50 Gew.-% eigenes Regenerat dazugegeben. Die Menge an COC in der Basisschicht B betrug wiederum 10 Gew.-%. Die Verfahrensparameter wurden im Vergleich zu Beispiel 1 nicht geändert. Es wurde die Gelbverfärbung der Folie visuell beobachtet. Anhand der Tabellen 2 und 3 sieht man, dass kaum eine Gelbverfärbung der Folie sichtbar geworden ist.

**Beispiel 5**

Die Zusammensetzung von Deckschichten A und C entsprach der in Beispiel 3 beschriebenen Ausführungsform einer Folie. Die Schichtdicke der siegelnden Deckschicht A betrug aber 2,5 µm und die der pigmentierten Deckschicht C betrug 2 µm. Die Folie hatte eine Gesamtdicke von 45 µm und die COC-Konzentration in der Basisschicht

betrug 9 Gew.-%. Die Verfahrensparameter wurden wie in Beispiel 1 eingestellt. Die erzielten Eigenschaften derart hergestellter Folien sind in den Tabellen 2 und 3 dargestellt.

Die Siegelnahtfestigkeit war bei guter Verarbeitbarkeit deutlich erhöht.

**Beispiel 6**

Wie in Beispiel 5 wurde eine Folie hergestellt, aber mit 50 % eigenem Regenerat in der Basisschicht B. Alle sonstigen Parameter wie Beispiel 5. Die Eigenschaften der Folie waren gegenüber Beispiel 5 weitgehend unverändert.

Es wurde die Gelbverfärbung der Folie visuell beobachtet. Anhand der Tabellen 2 und 3 sieht man, dass kaum eine Gelbverfärbung der Folie sichtbar geworden ist.

**Vergleichsbeispiel 1**

Analog dem Beispiel 1 aus der EP-A-0 300 060 (hier handelte es sich um eine nicht siegelfähige weiße Folie) wurde eine Weißfolie hergestellt. In Abwandlung von diesem Beispiel wurde die Folie zusätzlich mit einer 2 µm dicken siegelfähigen Schicht A analog Beispiel 5 ausgestattet. Außerdem wurden in Abänderung des Beispiels in EP-A-0 300 060 der Basisschicht 50 % eigenes Regenerat zugegeben. Anhand der Tabellen 2 und 3 sieht man, dass eine deutliche Gelbverfärbung der Folie sichtbar geworden ist. Außerdem ist die Rauigkeit der Folie für viele Anwendungen deutlich zu hoch und der Glanz der nicht siegelnden Seite mit 58 (Beispiele 1 - 6 wiesen auf dieser Seite Glanzwerte zwischen 116 und 172 auf) für viele Anwendungen zu niedrig.

| | |
|---|---|
| 45,0 Gew.-% | Polyethylenterephthalat-Homopolymer mit einem SV-Wert von 800 |
| 50,0 Gew.-% | Eigenregenerat (95 Gew.-% Polyester + 5 Gew.-% Polypropylen) |
| 5,0 Gew.-% | Polypropylen |

**Tabelle 2**

| Beispiel | Foliendicke µm | Folienaufbau | Schichtdicken µm | | | Pigmente in den Schichten | | | mittlerer Pigment-Durchmesser in Schichten µm | | | Pigmentkonzentrationen ppm | | |
|---|---|---|---|---|---|---|---|---|---|---|---|---|---|---|
| | | | A | B | C | A | B | C | A | B | C | A | B | C |
| B 1 | 23 | AB | 1,5 | 21,5 | - | Sylobloc 44 H<br>Aerosil TT 600 | kein | | 2,5<br>0,04 | | | 300<br>375 | 0 | |
| B 2 | 23 | AB | 1,5 | 21,5 | - | Sylobloc 44 H<br>Aerosil TT 600 | etwas über Regenerat | | 2,5<br>0,04 | | 2,5<br>0,04 | 300<br>375 | < 100 ppm | 1200<br>1500 |
| B 3 | 23 | ABC | 1,5 | 20 | 1,5 | Sylobloc 44 H<br>Aerosil TT 600 | kein | Sylobloc 44 H<br>Aerosil TT 600 | 2,5<br>0,04 | | 2,5<br>0,04 | 300<br>375 | 0 | 1200<br>1500 |
| B 4 | 23 | ABC | 1,5 | 20 | 1,5 | Sylobloc 44 H<br>Aerosil TT 600 | etwas über Regenerat | Sylobloc 44 H<br>Aerosil TT 600 | 2,5<br>0,04 | | 2,5<br>0,04 | 300<br>375 | < 100 ppm | 1200<br>1500 |
| B 5 | 45 | ABC | 2,5 | 40,5 | 2 | Sylobloc 44 H<br>Aerosil TT 600 | kein | Sylobloc 44 H<br>Aerosil TT 600 | 2,5<br>0,04 | | 2,5<br>0,04 | 300<br>375 | 0 | 1200<br>1500 |
| B 6 | 45 | ABC | 2,5 | 40,5 | 2 | Sylobloc 44 H<br>Aerosil TT 600 | etwas über Regenerat | Sylobloc 44 H<br>Aerosil TT 600 | 2,5<br>0,04 | | 2,5<br>0,04 | 300<br>375 | < 100 ppm | 1200<br>1500 |

**Tabelle 3**

| Beispiel | Dicke der Folie µm | Schichtaufbau | Additiv zum Polyesterrohstoff | Konzentration des Additivs in Basisschicht % | Glasübergangstemperatur des Additivs °C | Weißgrad % | Opazität % | Beurteilung des Gelbgrades der Folie | Siegelanspringtemperatur (Seite A gegen A) °C | Siegelnahtfestigkeit (Seite A gegen A) N/15mm | Reibung COF C/B gegen C/B | Mittlere Rauigkeit $R_a$ nm | |
|---|---|---|---|---|---|---|---|---|---|---|---|---|---|
| | | | | | | | | | | | | A-Seite | B-Seite |
| B 1 | 23 | AB | COC | 10 | 170 | 75 | 72 | ++ | 101 | 1,9 | 0,51 | 25 | 118 |
| B 2 | 23 | AB | COC | 10 | 170 | 74 | 74 | + | 99 | 2,1 | 0,52 | 27 | 120 |
| B 3 | 23 | ABC | COC | 10 | 170 | 71 | 71 | ++ | 97 | 2,0 | 0,43 | 26 | 64 |
| B 4 | 23 | ABC | COC | 10 | 170 | 72 | 70 | + | 93 | 2,1 | 0,41 | 28 | 66 |
| B 5 | 45 | ABC | COC | 9 | 170 | 81 | 76 | ++ | 98 | 3,0 | 0,44 | 25 | 67 |
| B 6 | 45 | ABC | COC | 9 | 170 | 82 | 82 | + | 99 | 3,1 | 0,45 | 25 | 66 |
| VB 1 | 100 | AB | Polypropylen | 10 | -10 | 88 | 80 | - | 98 | 2,8 | 0,45 | 27 | 182 |

Zeichenerklärung für den Gelbgrad der produzierten Folien:

++ : keine Gelbfärbung ist zu erkennen

\+ : geringe Gelbfärbung ist zu erkennen

\- : deutliche Gelbfärbung ist zu erkennen

## Patentansprüche

1. Weiße, siegelfähige, biaxial orientierte, koextrudierte Polyesterfolie umfassend mindestens eine Basisschicht B und mindestens eine siegelfähige Deckschicht A, beide aus thermoplastischem Polyester, **dadurch gekennzeichnet, dass** zumindest die Basisschicht B neben dem thermoplastischen Polyester zusätzlich ein Cycloolefincopolymeres (COC) in einer Menge im Bereich von 2 bis 60 Gew.-%, bezogen auf das Gewicht der Basisschicht B, enthält, wobei das COC eine Glasübergangstemperatur $T_g$ von 70°C bis 270°C aufweist.

2. Weiße, siegelfähige Polyesterfolie nach Anspruch 1, **dadurch gekennzeichnet, dass** das Cycloolefincopolymer (COC) Polynorbornen, Polydimethyloctahydronaphthalin, Polycyclopenten oder Poly(5-methyl)norbornen enthält und eine Glasübergangstemperatur $T_g$ im Bereich von 90 bis 250 °C besitzt.

3. Weiße, siegelfähige Polyesterfolie nach Anspruch 1 oder 2, **dadurch gekennzeichnet, dass** das COC eine Glasübergangstemperatur $T_g$ im Bereich von 110 bis 220 °C besitzt.

4. Weiße, siegelfähige Polyesterfolie nach einem der Ansprüche 1 bis 3, **dadurch gekennzeichnet, dass** die Folie einen Weißgrad von mehr als 70 % und eine Opazität von mehr als 55 % aufweist.

5. Weiße, siegelfähige Polyesterfolie nach einem oder mehreren der Ansprüche 1 bis 4, **dadurch gekennzeichnet, dass** die siegelfähige Deckschicht A ein Polyestercopolymer enthält, das Ethylenterephthalat-Einheiten in einer Menge im Bereich von 40 bis 95 mol-% und Ethylenisophthalat-Einheiten in einer Menge von 60 bis 5 mol-% enthält, bezogen auf das Gesamtmenge an Carbonsäureeinheiten, und dass die anderen Monomereinheiten aus aliphatischen, cycloaliphatischen oder aromatischen Diolen stammen.

6. Weiße, siegelfähige Polyesterfolie nach einem oder mehreren der Ansprüche 1 bis 5, **dadurch gekennzeichnet, dass** die siegelfähige Deckschicht A eine Dicke im Bereich von 0,2 bis 5,0 µm besitzt und eine Siegelanspringtemperatur von ≤ 200 °C aufweist.

7. Weiße, siegelfähige Polyesterfolie nach einem oder mehreren der Ansprüche 1 bis 6, **dadurch gekennzeichnet, dass** die Folie eine Gesamtdicke im Bereich von 4 bis 500 µm besitzt, vorzugsweise von 8 bis 300 µm, insbesondere von 10 bis 300 µm.

8. Weiße, siegelfähige Polyesterfolie nach einem oder mehreren der Ansprüche 1 bis 7, **dadurch gekennzeichnet, dass** die Rauigkeit der siegelfähigen Deckschicht A, ausgedrückt durch ihren $R_a$-Wert, kleiner/gleich 100 nm, bevorzugt ≤ 80 nm ist und dass ihr Messwert für die Oberflächengasströmungszeit im Bereich von 50 bis 4000 s liegt.

9. Weiße, siegelfähige Polyesterfolie nach Anspruch 8, **dadurch gekennzeichnet, dass** zwischen der COC-haltigen Basisschicht B und der siegelfähigen Deckschicht A eine Zwischenschicht angeordnet ist.

10. Weiße, siegelfähige Polyesterfolie nach einem oder mehreren der Ansprüche 1 bis 9, **dadurch gekennzeichnet, dass** sie eine weitere Deckschicht C enthält, deren Reibungskoeffizient (COF) gegen sich selbst kleiner als 0,7, bevorzugt ≤ 0,6 ist, deren Rauigkeit, ausgedrückt durch ihren $R_a$-Wert, ≥30 nm ist und deren Messwert der Gasströmung im Bereich unterhalb von 500 s liegt.

11. Weiße, siegelfähige Polyesterfolie nach Anspruch 10, **dadurch gekennzeichnet, dass** die Deckschicht C eine Menge an Pigmenten im Bereich zwischen 0,1 und 10 Gew.-%, vorzugsweise zwischen 0,12 und 8 Gew.-%, insbesondere zwischen 0,15 und 6 Gew.-%, enthält.

12. Verfahren zur Herstellung einer Polyesterfolie nach Anspruch 1, **dadurch gekennzeichnet, dass** das Polymere bzw. die Polymermischung der einzelnen Schichten in getrennten Extrudern komprimiert und verflüssigt werden, die Schmelzen dann gleichzeitig durch eine Flachdüse (Breitschlitzdüse) gepresst werden, die ausgepresste mehrschichtige Folie auf einer oder mehreren Abzugswalzen abgezogen wird, die so erhaltene Vorfolie anschließend biaxial gestreckt und thermofixiert wird und gegebenenfalls an einer zur Behandlung vorgesehenen Oberflächensicht corona- oder flammbehandelt wird.

13. Verfahren nach Anspruch 12, **dadurch gekennzeichnet, dass** bei der Herstellung der Folie immanent anfallendes Verschnittmaterial als Regenerat in einer Menge im Bereich von 10 bis 70 Gew.-%, bezogen auf das Gesamtgewicht der Folie, wieder für die Folienherstellung eingesetzt wird.

**14.** Verwendung einer weißen, siegelfähigen Polyesterfolie nach einem oder mehreren der Ansprüche 1 bis 11 als Innenraumverkleidung, für den Messebau und Messeartikel, als Display, für Schilder, im Beleuchtungssektor, im Laden- und Regalbau, als Werbeartikel, als Kaschiermedium, für Abdeckungen von Materialien, oder in Elektroanwendungen, insbesondere auf schnelllaufenden Maschinen.

## Claims

**1.** A white, sealable, biaxially oriented, coextruded polyester film encompassing at least one base layer B and at least one sealable outer layer A, both made from thermoplastic polyester, wherein at least the base layer B also comprises, alongside the thermoplastic polyester, an amount in the range from 2 to 60% by weight, based on the weight of the base layer B, of a cycloolefin copolymer (COC), where the COC has a glass transition temperature $T_g$ of 70°C to 270°C.

**2.** The white, sealable polyester film as claimed in claim 1, wherein the cycloolefin copolymer (COC) comprises polynorbornene, polydimethyloctahydronaphthalene, polycyclopentene, or poly(5-methyl)norbornene, and has a glass transition temperature $T_g$ in the range from 90 to 250°C.

**3.** The white, sealable polyester film as claimed in claim 1 or 2, wherein the COC has a glass transition temperature $T_g$ in the range from 110 to 220°C.

**4.** The white, sealable polyester film as claimed in any of claims 1 to 3, which has a whiteness of more than 70% and an opacity of more than 55%.

**5.** The white, sealable polyester film as claimed in one or more of claims 1 to 4, wherein the sealable outer layer A comprises a polyester copolymer which contains an amount in the range from 40 to 95 mol% of ethylene terephthalate units and contains an amount in the range from 60 to 5 mol% of ethylene isophthalate units, based on the total amount of carboxylic acid units, and wherein the monomer units derive from aliphatic, cycloaliphatic or aromatic diols.

**6.** The white, sealable polyester film as claimed in one or more of claims 1 to 5, wherein the sealable outer layer A has a thickness in the range from 0.2 to 5.0 µm, and has a minimum sealing temperature of ≤200°C.

**7.** The white, sealable polyester film as claimed in one or more of claims 1 to 6, which has a total thickness in the range from 4 to 500 µm, preferably from 8 to 300 µm, in particular from 10 to 300 µm.

**8.** The white, sealable polyester film as claimed in one or more of claims 1 to 7, wherein the roughness of the sealable outer layer A, expressed via its $R_a$ value, is less than or equal to 100 nm, preferably ≤80 nm, and that its value measured for surface gas flow time is in the range from 50 to 4 000 s.

**9.** The white, sealable polyester film as claimed in claim 8, wherein an intermediate layer has been arranged between the COC-containing base layer B and the sealable outer layer A.

**10.** The white, sealable polyester film as claimed in one or more of claims 1 to 9, which has another outer layer C whose coefficient of friction (COF) with respect to itself is smaller than 0.7, preferably ≤0.6, and whose roughness, expressed via its $R_a$ value, is ≥30 nm, and whose value measured for surface gas flow time is in the range below 500 s.

**11.** The white, sealable polyester film as claimed in claim 10, wherein the outer layer C comprises an amount of pigments in the range from 0.1 to 10% by weight, preferably from 0.12 to 8% by weight and in particular from 0.15 to 6% by weight.

**12.** A process for producing a polyester film as claimed in claim 1, which comprises compressing and plasticizing, in separate extruders, the polymer or the polymer mixture for each of the layers, then simultaneously pressing the melts through a flat-film die (slot die), drawing off the extruded multilayer film on one or more take-off rollers, then biaxially stretching and heat-setting the resultant prefilm, and, where appropriate, corona- or flame-treating the

prefilm on a surface visibility intended for treatment.

**13.** The process as claimed in claim 12, wherein cut material arising directly during production of the film is reused for film production in the form of regrind in an amount in the range from 10 to 70% by weight, based on the total weight of the film.

**14.** The use of a white, sealable polyester film as claimed in one or more of claims 1 go 11 as interior decoration, for the construction of exhibition stands or for exhibition requisites, as a display, for placards, in the lighting sector, in the fitting out of shops or of stores, as a promotional item, as a laminating medium, for protective covers of materials, or in electrical applications, in particular on high-speed machinery.

**Revendications**

**1.** Film de polyester, blanc, fusible, coextrudé à orientation biaxiale comprenant au moins une couche de base B et au moins une couche de recouvrement A fusible, les deux composés polyester thermoplastiques, **caractérisé en ce que** l'au moins la couche de base B contient outre le polyester thermoplastique additionnellement un copolymère de cyclooléfine (COC) en une quantité de 2 à 60% en poids par rapport au poids de la couche de base B, le COC présentant une température de transition vitreuse $T_v$ de 70° à 270°C.

**2.** Film polyester, blanc, fusible selon la revendication 1, **caractérisé en ce que** le copolymère de cyclooléfine (COC) contient du polynorbornène, polydimethyloctahydronaphtaline, polycyclopentène ou poly(5-methyl)norbornène et présente une température de transition vitreuse $T_v$ de 90 à 250° C.

**3.** Film polyester fusible blanc selon la revendication 1 ou 2, **caractérisé** en que le COC présente une température de transition $T_v$ de 110 à 220°C.

**4.** Film de polyester fusible blanc selon l'une des revendications 1 à 3, **caractérisé en ce que** le film présente un degré de blancheur supérieur à 70% et une opacité supérieure à 55%.

**5.** Film polyester fusible blanc, selon l'une quelconque des revendications 1 à 4 **caractérisée en ce que** la couche de recouvrement A fusible contient un copolymère de polyester, contenant des unités éthylènerephtalate à raison de 40 à 95 % en mole et des unités de éthylèneisophtalate à raison de 60 à 5% en mole, par rapport à la quantité totale d'unité d'acide carboxylique, et **en ce que** les autres unités monomères sont dérivés de dioles aliphatiques, cycloaliphatiques ou aromatiques.

**6.** Film polyester fusible blanc selon l'une quelconque des revendications 1 à 5, **caractérisé en ce que** la couche de recouvrement fusible présente une épaisseur de 0,2 à 5,0 μm et une température de début de fusion de ≤ à 200°C.

**7.** Film polyester fusible blanc selon l'une quelconque de revendications 1 à 6, **caractérisé en ce que** le film présente une épaisseur totale de 4 à 500 μm, de préférence 8 à 300 μm, en particulier de 10 à 300 μm.

**8.** Film polyester fusible blanc selon l'une quelconque des revendications 1 à 7, **caractérisé en ce que** la rugosité de la couche de recouvrement A fusible, exprimée par sa valeur Ra et ≤ à 10 nanomètres, de préférence ≤ à 80 nanomètres et **en ce que** sa valeur de mesure pour le temps d'écoulement gazeux de surface est compris entre 50 et 4000 secondes.

**9.** Film polyester fusible blanc selon la revendication 8, **caractérisé** selon la couche intermédiaire disposé entre la couche de base B contenant du COC et la couche de recouvrement A est fusible.

**10.** Film polyester fusible blanc selon l'une quelconque des revendications 1 à 9, **caractérisé en ce qu'**elle comprend une autre couche de recouvrement C, dont le coefficient de friction (COF) vis-à-vis d'elle-même est inférieure à 0,7 de préférence ≤ à 0,6, dont la rugosité exprimée par sa valeur $R_a$ est ≥ à 30 nanomètres et dont la valeur de mesure de l'écoulement gazeux est inférieur à 500 secondes.

**11.** Film polyester fusible blanc selon la revendication 10, **caractérisé en ce que** la couche de recouvrement C contient une quantité de pigments compris entre 0,1 à 10 % en poids de préférence entre 0,12 et 8 % en poids, en particulier

entre 0,15 et 6 % en poids.

**12.** Procédé de préparation d'un film polyester selon la revendication 1, **caractérisé en ce que** les polymères ou le mélange de polymères de chaque couche est comprimé et liquéfié dans des extrudeuses séparées, la fusion est pressée simultanément dans une buse à fente (buse à fente large), le film extrudé multicouches est transporté sur un ou plusieurs rouleaux, le pré-film ainsi obtenu est ensuite étiré de façon bi axiale et thermo fixé et le cas échéant soumis à un traitement par flamme aux surfaces prévues pour ce traitement.

**13.** Procédé selon la revendication 12, **caractérisé en ce que** le matériau de chute produit lors de la préparation du film de façon immanente est recyclé dans la préparation de film à titre de régénérat en une quantité de 10 à 70 % en poids par rapport au poids total du film.

**14.** Utilisation d'un film de polyester fusible blanc selon l'une quelconque des revendications 1 à 11, comme revêtement d'intérieur afficheur pour des écriteaux dans le secteur de l'éclairage, dans la construction de magasins et d'étagères, comme articles publicitaires, matériau de doublage pour des protections de matériaux ou des protection de l'électricité, en particulier sur des machines à grande vitesse.